# EUROPEAN PATENT SPECIFICATION

(11) **EP 4 506 196 B1**
(45) Date of publication and mention of the grant of the patent: **20.08.2025**
(21) Application number: 24188241.4
(22) Date of filing: 12.07.2024
(51) Int. Cl.: B60K 1/00

(54) **VEHICLE DRIVING DEVICE**
FAHRZEUGANTRIEBSVORRICHTUNG
DISPOSITIF D'ENTRAÎNEMENT DE VÉHICULE

(30) Priority: 10.08.2023 JP 2023130916
(43) Date of publication of application: 12.02.2025
(73) Proprietor: Aisin Corporation, Aichi 448-8650 (JP)
(72) Inventor: KATSUDA, Takuya, Kariya, 448-8650 (JP); MAEDA, Takuyo, Kariya, 448-8650 (JP)
(74) Representative: Kramer Barske Schmidtchen Patentanwälte PartG mbB

(56) References cited:
- CN-A- 104 602 934
- CN-A- 106 183 763
- CN-A- 110 481 298
- DE-A1- 102009 015 414
- US-B2- 11 155 148

## Description

### TECHNICAL FIELD

This invention relates to a vehicle driving device including a rotating electrical machine.

### BACKGROUND DISCUSSION

A vehicle driving device including a rotating electrical machine is known. CN 106183763A (Reference 1) discloses a vehicle driving device including a rotating electrical machine (11), a power transmission mechanism (15), and a pair of mount brackets (2, 8) coupled to a vehicle body. One (2) of the pair of mount brackets is fixed to a cover of the rotating electrical machine (11), and the other (8) of the pair of mount brackets is fixed to a left side case of the power transmission mechanism (15).

When the vehicle driving device disclosed in Reference 1 is coupled to a coupling portion of the vehicle body disposed above the vehicle driving device, since the coupling portion of the vehicle body and the rotating electrical machine and the power transmission mechanism are separated from one another in an up-down direction, a dimension of the mount bracket in the up-down direction needs to be increased. In this case, the mount bracket may be increased in size to ensure a strength necessary to reduce shaking of the vehicle driving device.

A need thus exists for a vehicle driving device in which the size of a mount bracket can easily be reduced even when a coupling portion between the mount bracket and a vehicle body is located on the upper side with respect to a rotating electrical machine and a power transmission mechanism.

### SUMMARY

According to an aspect of this invention, a vehicle driving device includes: a rotating electrical machine; an output member configured to be drivingly coupled to a wheel; a power transmission mechanism configured to transmit a driving force between the rotating electrical machine and the output member; an inverter module configured to drive and control the rotating electrical machine; a power source module including at least one of a voltage conversion circuit electrically connected to an on-vehicle battery and configured to perform voltage conversion of the on-vehicle battery, a charging circuit configured to charge the on-vehicle battery from an external power source, and a power supply circuit configured to supply power from the on-vehicle battery to an outside; a first case portion in which the rotating electrical machine and the power transmission mechanism are accommodated; a second case portion in which at least one of the inverter module and the power source module are accommodated; and a mount bracket configured to be coupled to a vehicle body of a vehicle in an on-vehicle state that is a state of being mounted on the vehicle, in which in the on-vehicle state, the second case portion is disposed on an upper side with respect to the first case portion, and the mount bracket is attached to the second case portion.

According to the present configuration, since the mount bracket is attached to the second case portion disposed on the upper side with respect to the first case portion in the on-vehicle state, the dimension of the mount bracket in the up-down direction is easily reduced even when the coupling portion of the mount bracket and the vehicle body is located on the upper side with respect to the rotating electrical machine and the power transmission mechanism. Therefore, it is easy to reduce the size and weight of the mount bracket while ensuring the strength of the mount bracket.

### BRIEF DESCRIPTION OF THE DRAWINGS

The foregoing and additional features and characteristics of this invention will become more apparent from the following detailed description considered with the reference to the accompanying drawings, wherein:
Fig. 1 is a diagram illustrating a vehicle driving device according to an embodiment;
Fig. 2 is a schematic view of the vehicle driving device in Fig. 1;
Fig. 3 is an exploded perspective view illustrating the vehicle driving device in Fig. 2 in detail;
Fig. 4 is an exploded perspective view of the vehicle driving device in Fig. 3 as viewed from another direction;
Fig. 5 is a perspective view illustrating the vehicle driving device in Fig. 2 in detail;
Fig. 6 is a perspective view of the vehicle driving device in Fig. 5 as viewed from another direction;
Fig. 7 is a perspective view of an auxiliary mount bracket of the vehicle driving device in Fig. 6;
Fig. 8 is a control block diagram of the vehicle driving device in Fig. 1;
Fig. 9 is a view illustrating an arrangement of an inverter module in Fig. 2;
Fig. 10 is a diagram illustrating a coolant path including a cooling unit in Fig. 2; and
Fig. 11 is a view illustrating coupling of the vehicle driving device in a vehicle in Fig. 1.

### DETAILED DESCRIPTION

Hereinafter, an embodiment of a vehicle driving device 10 will be described with reference to the drawings.

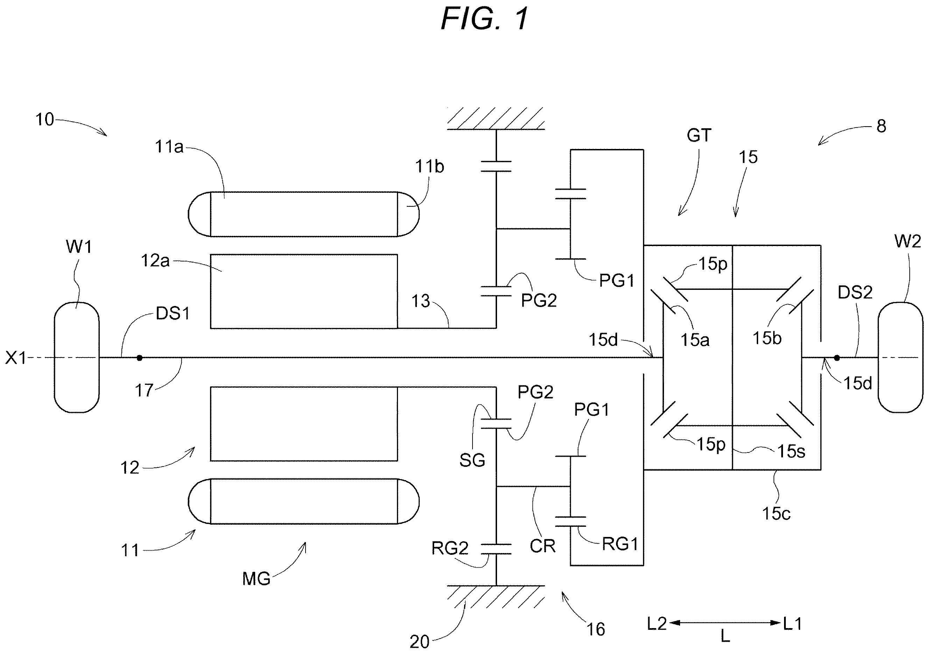

Fig. 1 is a diagram illustrating a vehicle 8 equipped with the vehicle driving device 10. The vehicle driving device 10 includes a rotating electrical machine MG, an output member drivingly coupled to wheels (W1, W2), and a power transmission mechanism GT that transmits a driving force between the rotating electrical machine MG and the output member. Here, a direction along a rotation axis center X1 of a rotor 12 of the rotating electrical machine MG is referred to as an axial direction L. The power transmission mechanism GT is disposed on an axial direction first side L1 that is one side in the axial direction L with respect to the rotor 12 of the rotating electrical machine MG. The rotating electrical machine MG is a driving force source of the vehicle 8. The power transmission mechanism GT includes a speed reducer 16 and a differential gear mechanism 15. Examples of the "output member" include a first side gear 15a, a second side gear 15b, spline engagement portions 15d, a first drive shaft DS1, a second drive shaft DS2, and a coupling shaft 17 to be described later.

The vehicle driving device 10 includes a case 20, and the case 20 supports an inverter module INV and a power source module PWR to be described later. The case 20 further supports a refrigerant circuit module 46 to be described later. The term "support" is not limited to the case of using an external portion of the case 20, but also includes an aspect of being supported on an inner surface of the case 20. That is, the inverter module INV, the power source module PWR, and the refrigerant circuit module 46 may be accommodated in the case 20. The inverter module INV and the power source module PWR may be accommodated in the case 20, and the refrigerant circuit module 46 may be supported outside the case 20.

In the present specification, the term "drivingly coupled" refers to a state in which two rotating components are coupled such that a driving force can be transmitted, and includes a state in which the two rotating components are coupled to rotate integrally or a state in which the two rotating components are coupled such that a driving force can be transmitted via one or two or more transmission members. Examples of such a transmission member include various members that transmit the rotation at the same speed or variable speeds, such as shafts, gear mechanisms, belts, and chains. Examples of the transmission member may include an engagement device that selectively transmits the rotation and the driving force, such as a friction engagement device and a meshing type engagement device. However, when the term "drivingly coupled" is used for a rotating component of a planetary gear mechanism, the term "drivingly coupled" refers to a state in which the planetary gear mechanism is drivingly coupled without another rotating component. In the present specification, the term "rotate integrally" refers to integrally rotating whether separable or non-separable. That is, a plurality of members that integrally rotate may be integrally formed from the same member, or may be implemented by separate members and integrated by welding, spline connection, or the like. Further, in the present specification, "overlapping in a specific direction view" relating to an arrangement of two elements means that when a virtual straight line parallel to a visual line direction is moved in directions each orthogonal to the virtual straight line, there is at least a part of a region in which the virtual straight line intersects with both of the two elements.

The output member is drivingly coupled to a pair of wheels (W1, W2). The pair of wheels includes a first wheel W1 and a second wheel W2, the first wheel W1 is drivingly coupled to the first drive shaft DS1, and the second wheel W2 is drivingly coupled to the second drive shaft DS2. In the present embodiment, a pair of side gears (15a, 15b), which are output gears of the differential gear mechanism 15, include the first side gear 15a and the second side gear 15b. The first side gear 15a is drivingly coupled to the first drive shaft DS1 via the coupling shaft 17, and the second side gear 15b is drivingly coupled to the second drive shaft DS2. For example, the first side gear 15a and the coupling shaft 17 are coupled by spline connection, and the second side gear 15b and the second drive shaft DS2 are also coupled by spline connection. Coupling portions thereof are the spline engagement portions 15d.

In the following description, the direction along the rotation axis center X1 of the rotor 12 is referred to as the "axial direction L" as described above. Further, one side in the axial direction L is referred to as the "axial direction first side L1", and the other side in the axial direction L is referred to as an "axial direction second side L2". In the present embodiment, the rotating electrical machine MG, the speed reducer 16, and the differential gear mechanism 15 are disposed coaxially in this order from the axial direction second side L2 toward the axial direction first side L1. The vehicle driving device 10 of the present embodiment has a single-shaft configuration. A shaft on which the rotating electrical machine MG, the speed reducer 16, and the differential gear mechanism 15 having the rotation axis center X1 as a shaft center are disposed is a rotation shaft of the vehicle driving device 10, and is a rotation shaft of the rotating electrical machine MG, the speed reducer 16, and the differential gear mechanism 15. A direction orthogonal to the rotation axis center X1 of the rotor 12 is referred to as a "radial direction". In the radial direction, a side of the rotation axis center X1 of the rotor 12 is referred to as a "radial direction inner side", and an opposite side thereof is referred to as a "radial direction outer side". A direction along a vertical direction in a vehicle mounted state in which the vehicle driving device 10 is mounted on the vehicle 8 is referred to as an "up-down direction Z", an upper side is referred to as an "upper side Z1 in the up-down direction Z", and a lower side is referred to as a "lower side Z2 in the up-down direction Z". When the vehicle driving device 10 is mounted horizontally on the vehicle 8, one direction in the radial direction coincides with the up-down direction Z. Further, a direction orthogonal to the axial direction L and the up-down direction Z is referred to as a "front-rear direction H", one side in the front-rear direction H is referred to as a "front-rear direction first side H1", and the other side is referred to as a "front-rear direction second side H2". In the present embodiment, the front-rear direction first side H1 is a front side of the vehicle 8, and the front-rear direction second side H2 is a rear side. Further, a direction orthogonal to the front-rear direction H of a vehicle body 80 as viewed in the up-down direction is referred to as a width direction. In the present embodiment, the "width direction" and the axial direction L of the vehicle 8 are parallel to each other, and may not be parallel to each other.

The rotating electrical machine MG functions as a driving force source for the wheels (W1, W2). As illustrated in Fig. 1, the rotating electrical machine MG includes a stator 11 and the rotor 12 coupled to a rotor shaft 13 to rotate integrally with the rotor shaft 13. The rotating electrical machine MG is an inner rotor type rotating electrical machine. The rotating electrical machine MG includes the rotor 12 rotatably disposed toward the radial direction inner side with respect to the stator 11. The rotor 12 includes a rotor core 12a and a permanent magnet (not illustrated) fixed to the rotor core 12a. The rotor shaft 13 is formed in a cylindrical shape coaxial with the rotor core 12a, and a sun gear SG of the planetary gear mechanism constituting the speed reducer 16 is disposed on an outer peripheral side of the rotor shaft 13 on the axial direction first side L1 to rotate integrally with the rotor shaft 13. As to be described later, the sun gear SG is an input element of the speed reducer 16. In the illustrated example, the rotating electrical machine MG is a rotating field type rotating electrical machine.

The stator 11 includes a cylindrical stator core 11a and a coil wound around the stator core 11a. The coil includes a coil end portion 11b protruding outward in the axial direction L from the stator core 11a. A shaft center of the stator core 11a is the same shaft center as the rotation axis center X1 of the rotor 12. In the present embodiment, the shaft center of the stator core 11a is the same shaft center as the rotation axis center X1 of a differential case 15c to be described later. In the present embodiment, the stator 11 is fixed to the case 20.

As illustrated in Fig. 1, the speed reducer 16 includes the input element that rotates integrally with the rotor shaft 13, a fixed element that is fixed to the case 20, an output element that rotates integrally with a differential input element (differential case 15c), and the planetary gear mechanism that includes the planetary gear. The planetary gear mechanism is a composite planetary gear mechanism including one sun gear SG, two ring gears (first ring gear RG1 and second ring gear RG2), two planetary gears (first planetary gear PG1 and second planetary gear PG2) that integrally rotate, and a carrier CR that rotatably supports the two planetary gears. In the present embodiment, the first planetary gear PG1 is formed to have a diameter smaller than that of the second planetary gear PG2.

The sun gear SG rotates integrally with the rotor 12 and the rotor shaft 13. The second ring gear RG2 is fixed to the case 20. The first ring gear RG1 is disposed on the axial direction first side L1 with respect to the second ring gear RG2 and is coupled to the differential case 15c to rotate integrally with the differential case 15c. The second planetary gear PG2 meshes with the sun gear SG and the second ring gear RG2, and the first planetary gear PG1 rotates integrally with the second planetary gear PG2 and meshes with the first ring gear RG1. In the present embodiment, the sun gear SG is the input element, the second ring gear RG2 is the fixed element, and the first ring gear RG1 is the output element. The carrier CR is not coupled to any rotating component or fixed element.

The differential gear mechanism 15 is a bevel gear type differential gear mechanism and includes pinions 15p and side gears (15a, 15b) which are bevel gears. The pinion 15p is supported by the differential case 15c and is rotatably supported by a pinion shaft 15s extending along the radial direction. The pinion shaft 15s rotates integrally with the differential case 15c, and the pinion 15p can rotate (spin) around the pinion shaft 15s and can rotate (revolve) around the rotation axis center X1 of the differential case 15c. A plurality of pinion shafts 15s are arranged in a radial shape (for example, a cross shape) around the rotation axis center X1 of the differential case 15c, and the pinions 15p are attached to the plurality of pinion shafts 15s, respectively. The differential case 15c accommodates the pinions 15p, the side gears (15a, 15b), and the pinion shafts 15s therein.

The side gears (15a, 15b) include the first side gear 15a and the second side gear 15b and are arranged in a pair spaced apart from each other in the axial direction L. The first side gear 15a and the second side gear 15b mesh with the plurality of pinions 15p, respectively, and are arranged to rotate around the rotation axis center X1 of the differential case 15c. As illustrated in Fig. 1, the first side gear 15a is coupled to the coupling shaft 17 which extends along the axial direction L through the speed reducer 16 and the radial direction inner side of the hollow cylindrical rotor shaft 13. The coupling shaft 17 is coupled to the first drive shaft DS1, which is drivingly coupled to the first wheel W1 which is a wheel on the axial direction second side L2, to rotate integrally with the first drive shaft DS1. Therefore, the first side gear 15a is drivingly coupled to the first wheel W1 via the coupling shaft 17. The second side gear 15b is coupled to the second drive shaft DS2, which is drivingly coupled to the second wheel W2 which is a wheel on the axial direction first side L1, to rotate integrally with the second drive shaft DS2.

The first drive shaft DS1, the second drive shaft DS2, the coupling shaft 17, the first side gear 15a, and the second side gear 15b that are drivingly coupled to the wheels (W1, W2) and rotate integrally with the wheels can all be referred to as rotary members corresponding to the output member. The first side gear 15a and the second side gear 15b form the differential gear mechanism 15 and may be referred to as the output members. Each of the first side gear 15a and the second side gear 15b includes a gear portion that meshes with the pinion 15p and a spline engagement portion 15d coupled to the coupling shaft 17 or the second drive shaft DS2. When considered functionally, the gear portion corresponds to the rotary member included in the differential gear mechanism 15, and the spline engagement portion 15d corresponds to the output member.

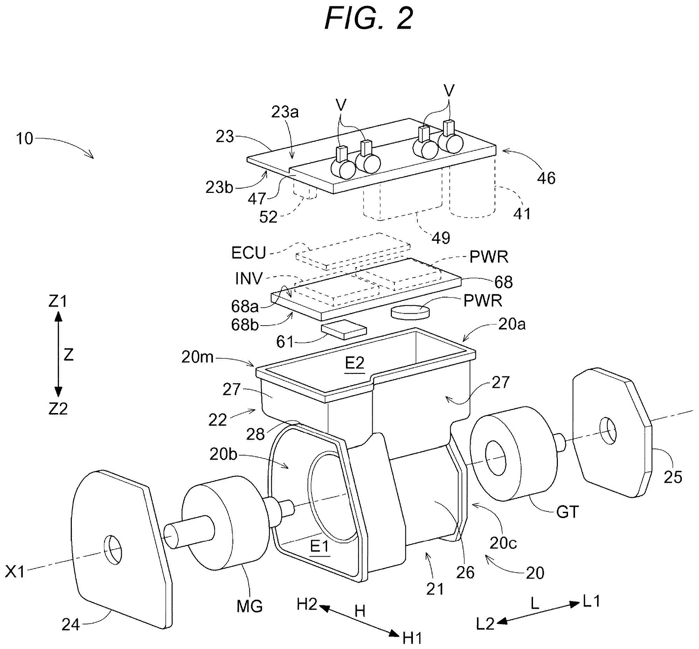

Fig. 2 is a schematic exploded perspective view of the vehicle driving device 10. The vehicle driving device 10 includes the "inverter module INV" for driving and controlling the rotating electrical machine MG. The inverter module INV is a circuit module that drives and controls the rotating electrical machine MG.

The vehicle driving device 10 includes a first case portion 21 in which the rotating electrical machine MG and the power transmission mechanism GT are accommodated. The first case portion 21 includes a first side wall portion 26 extending in the up-down direction Z and surrounding a first accommodation chamber E1 in which the rotating electrical machine MG and the power transmission mechanism GT are accommodated as viewed in the up-down direction in an on-vehicle state.

The vehicle driving device 10 includes a second case portion 22 in which at least one of the inverter module INV and the power source module PWR (to be described later) is accommodated. The second case portion 22 includes a second side wall portion 27 extending in the up-down direction Z and surrounding a second accommodation chamber E2 in which at least one of the inverter module INV and the power source module PWR is accommodated when viewed in the up-down direction in the on-vehicle state. The second case portion 22 is disposed on the upper side Z1 with respect to the first case portion 21 in the on-vehicle state.

In the present embodiment, the second case portion 22 includes a first opening portion 20a of the second accommodation chamber E2 opened toward the upper side Z1. The second case portion 22 further includes a first cover portion 23 that covers the first opening portion 20a. The inverter module INV and the power source module PWR are accommodated in the second accommodation chamber E2.

In the present embodiment, the case 20 is integrally formed to include the first accommodation chamber E1, the second accommodation chamber E2, and a partition wall 28 that partitions the first accommodation chamber E1 and the second accommodation chamber E2. That is, in the present embodiment, an aspect is described in which the first case portion 21, the second case portion 22, and the partition wall 28 are integrally formed by the same member. However, a structure of the case 20 is not limited thereto. For example, an aspect may be used in which the first case portion 21 and the second case portion 22 are integrally formed with the case 20 not including the partition wall 28. For example, an aspect may be used in which the first case portion 21 and the second case portion 22 are formed by separate members and integrated by a fastening member such as a bolt, welding, or the like with the case 20 not including the partition wall 28. When the first case portion 21 and the second case portion 22 are formed by separate members, a wall of at least one of the members is present at a boundary between the first case portion 21 and the second case portion 22. When the case 20 is integrated by combining separate members, one or both of the walls in the boundary may be considered as the partition wall 28.

In the present embodiment, the first case portion 21 is formed in a cylindrical shape with both sides in the axial direction L opened and includes the cylindrical first side wall portion 26. The first side wall portion 26 surrounds the power transmission mechanism GT from the radial direction outer side and corresponds to a portion surrounding the first accommodation chamber E1 of the case 20. An opening portion formed on the axial direction second side L2 is a second opening portion 20b, and an opening portion formed on the axial direction first side L1 is a third opening portion 20c. The second opening portion 20b is closed by a second cover portion 24, and the third opening portion 20c is closed by a third cover portion 25. The second cover portion 24 and the third cover portion 25 are formed with through holes through which the drive shafts (first drive shaft DS1, second drive shaft DS2) pass, respectively.

In the present embodiment, the first accommodation chamber E1 and the second accommodation chamber E2 are arranged to be aligned in the up-down direction Z. The inverter module INV is disposed on the upper side Z1 with respect to the rotating electrical machine MG and at a position overlapping the rotating electrical machine MG as viewed in the up-down direction along the up-down direction Z. The power source module PWR (to be described later) is disposed adjacent to the inverter module INV on the axial direction first side L1. As illustrated in Fig. 2, the power source module PWR is disposed on the upper side Z1 with respect to the power transmission mechanism GT and at a position overlapping the power transmission mechanism GT when viewed in the up-down direction along the up-down direction Z.

The case 20 includes a case main body 20m that is an accommodation member serving as a core of the first accommodation chamber E1 and the second accommodation chamber E2. The case main body 20m includes the first case portion 21 and the second case portion 22. The case main body 20m includes the partition wall 28 that partitions the first accommodation chamber E1 and the second accommodation chamber E2.

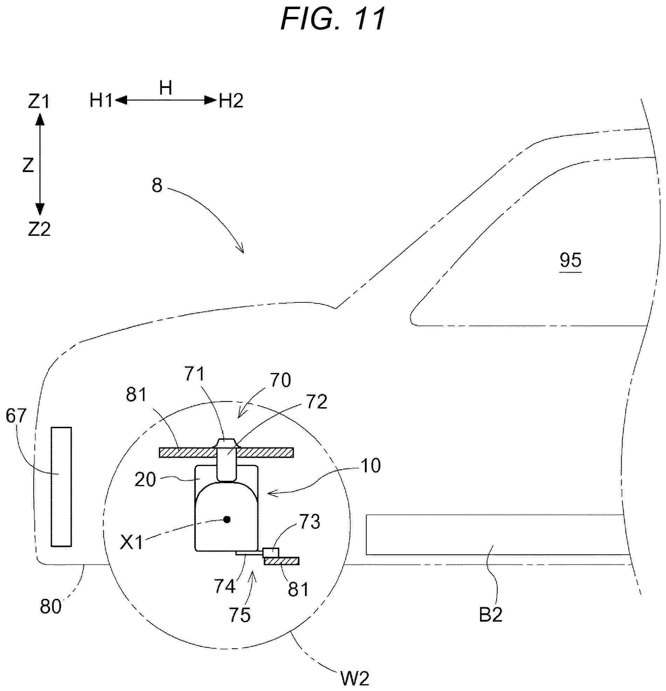

Here, a state in which the vehicle driving device 10 is mounted on the vehicle body 80 (see Fig. 11) of the vehicle 8 is referred to as an "on-vehicle state". In the present embodiment, the second accommodation chamber E2 is disposed at a position overlapping the rotating electrical machine MG and the power transmission mechanism GT accommodated in the first case portion 21 as viewed in the up-down direction in the on-vehicle state.

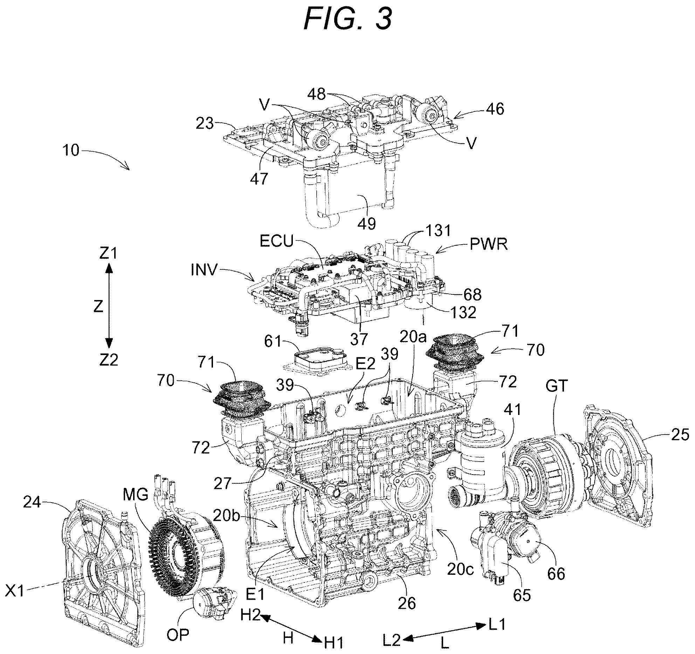

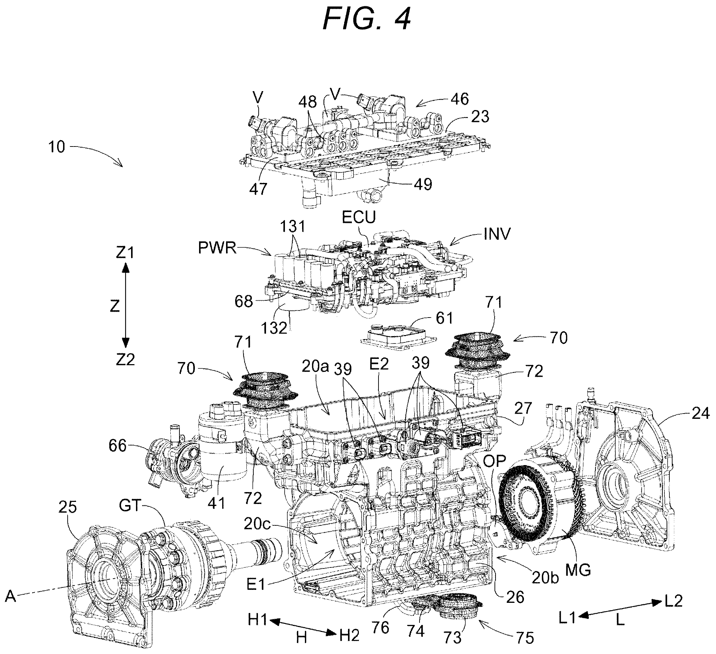

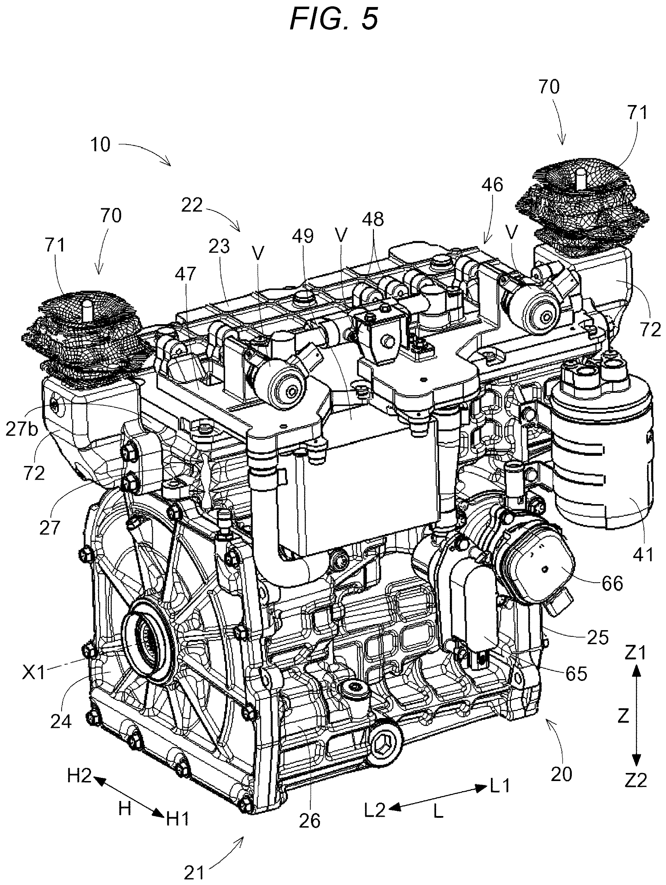

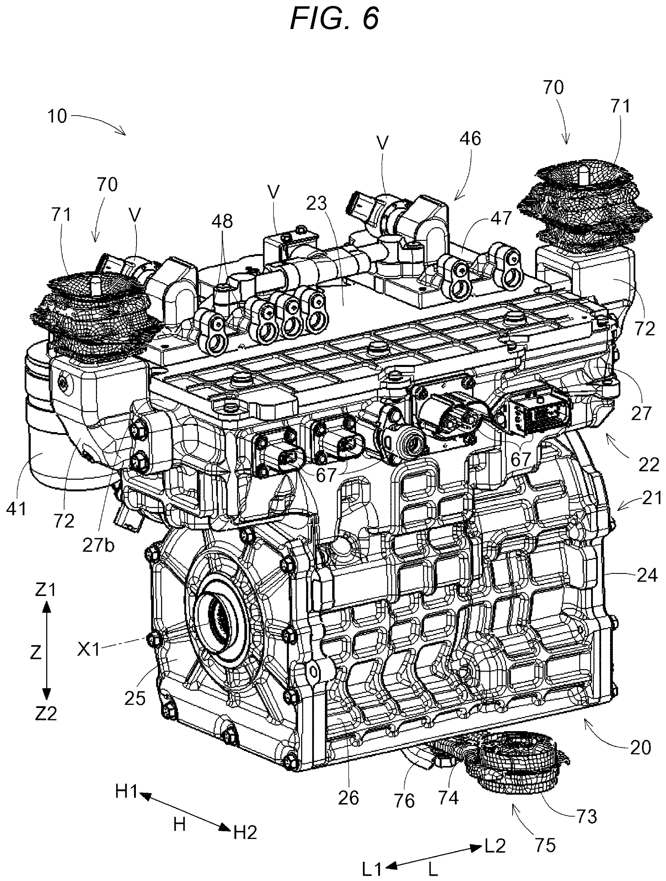

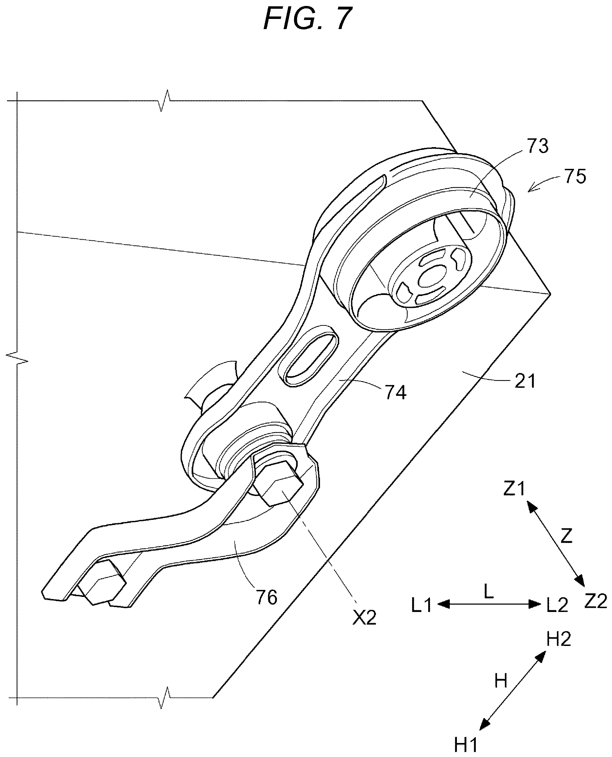

Fig. 3 is an exploded perspective view illustrating an example of the vehicle driving device 10. Fig. 4 is an exploded perspective view of the vehicle driving device 10 of Fig. 3 as viewed from another direction. Fig. 5 is a perspective view illustrating an example of the vehicle driving device 10. Fig. 6 is a perspective view of the vehicle driving device 10 of Fig. 5 as viewed from another direction. Fig. 7 is an enlarged perspective view of the first case portion 21 as viewed from the lower side Z2 and is a perspective view illustrating an auxiliary mount bracket 74.

The vehicle driving device 10 includes mount members 70 coupled to the vehicle body 80 in the on-vehicle state. The mount member 70 includes a mount bush 71 and a mount bracket 72 to be described later. In the examples illustrated in Figs. 5 and 6, a boss portion 27b is provided on each of a pair of outer surfaces facing opposite sides with the second accommodation chamber E2 sandwiched therebetween in the second side wall portion 27. The mount bracket 72 is attached to each of the pair of boss portions 27b. In the present embodiment, the mount bracket 72 is fastened to the boss portion 27b by bolts. The vehicle driving device 10 includes an auxiliary mount member 75 to be described later. The auxiliary mount member 75 includes an auxiliary mount bush 73 and the auxiliary mount bracket 74 to be described later.

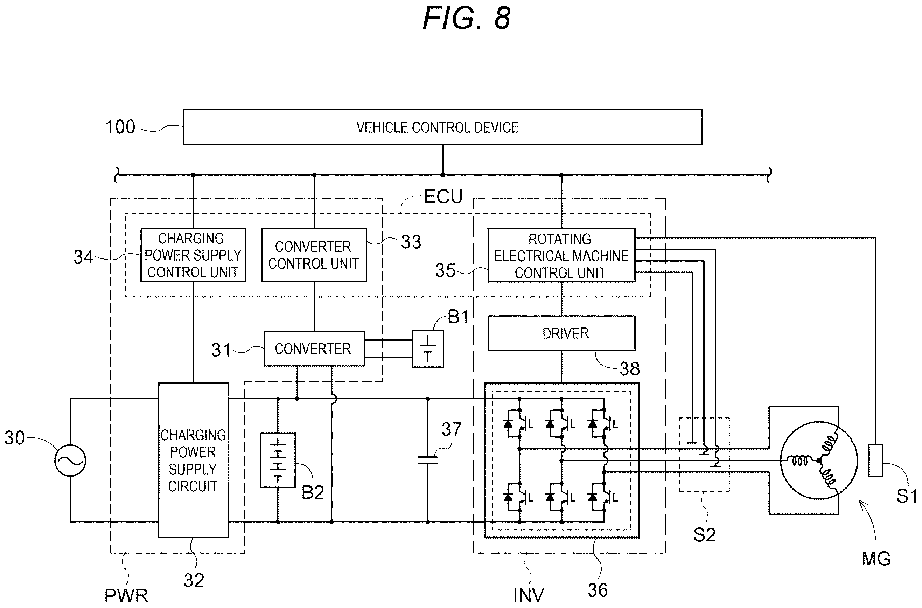

Fig. 8 is a control block diagram of the vehicle driving device 10. The vehicle driving device 10 includes the "power source module PWR". The power source module PWR includes a voltage conversion circuit (converter 31) that is electrically connected to an on-vehicle battery B2 and performs voltage conversion of the on-vehicle battery B2, and at least one of a charging circuit (charging power supply circuit 32) that is electrically connected to the on-vehicle battery B2 and charges the on-vehicle battery B2 from an external power source 30 and a power supply circuit (charging power supply circuit 32) that is electrically connected to the on-vehicle battery B2 and supplies power from the on-vehicle battery B2 to an outside. In the present embodiment, an aspect is described in which the charging power supply circuit 32 having a bidirectional function of charging the on-vehicle battery B2 and supplying the power from the on-vehicle battery B2 is provided. That is, the charging power supply circuit 32 has functions of a "charging circuit" and a "power supply circuit". In the present embodiment, a high-voltage circuit unit including the inverter module INV and the power source module PWR is formed.

As illustrated in Fig. 8, the rotating electrical machine MG is electrically connected, via an inverter circuit 36, to the on-vehicle battery B2 which is a DC power supply implemented by a power storage device such as a secondary battery or a capacitor. The rotating electrical machine MG has a function as a motor (electric motor) that receives electric power supplied from the on-vehicle battery B2 and generates power and a function as a generator (electric generator) that receives power supplied from the wheels (W1, W2) and generates electric power.

The rotating electrical machine MG generates the driving force by running with the electric power stored in the on-vehicle battery B2 and generates the electric power by the driving force transmitted from a side of the pair of wheels (W1, W2) to charge the on-vehicle battery B2. The on-vehicle battery B2 is a high-voltage DC power supply having a rated voltage of about 48 volts to 400 volts. Since the on-vehicle battery B2 supplies the electric power to the rotating electrical machine MG serving as the driving force source of the wheels, the electric power capacity is large, and the physical size is large. For example, the on-vehicle battery B2 is disposed under a floor of a cabin 95 (see Fig. 11) of the vehicle 8 to ensure a space of the cabin 95 and the like.

In the present embodiment, the on-vehicle battery B2 is not only charged by the electric power generated by the rotating electrical machine MG, but also can be charged by the electric power supplied from the external power source 30 such as an alternating current commercial power source having a rated voltage of about 100 volts to 240 volts. Therefore, the on-vehicle battery B2 can be connected to the external power source 30 via the charging power supply circuit 32. In addition, a charging power supply control unit 34 is provided to control the charging power supply circuit 32.

In recent years, it has been proposed to use the on-vehicle battery B2 of an electric vehicle or a hybrid vehicle as an emergency power source at the time of a disaster or the like. The charging power supply circuit 32 has the function of the power supply circuit in addition to the function of the charging circuit such that the on-vehicle battery B2 can be used as the emergency power source. Of course, when the use of such an on-vehicle battery B2 is not taken into consideration, the charging power supply circuit 32 may have only the function of the charging circuit.

In the present embodiment, the on-vehicle battery B2 also supplies the electric power to a low-voltage direct current power source B1 having a rated voltage of about 12 volts to 24 volts. The low-voltage direct current power source B1 serves as an electric power source for supplementary machines such as a headlight, a power window, a power steering, an on-vehicle air conditioner, and an electric oil pump of the vehicle 8, and serves as an electric power source for various control devices in the vehicle 8. In the related art, in the general vehicle 8, the low-voltage direct current power source B1 is charged by electric power generated by an alternator interlocked with a driving force source (for example, an internal combustion engine) of the vehicle 8. However, in the present embodiment, the low-voltage direct current power source B1 is charged by the electric power from the on-vehicle battery B2 (high-voltage DC power source) having a voltage higher than that of the low-voltage direct current power source B1 and having a large amount of stored power. Accordingly, the alternator may not be mounted, and the power loss of the driving force source (in the case of the present embodiment, the rotating electrical machine MG) of the vehicle 8 accompanying the driving of the alternator can be reduced.

As described above, to charge the low-voltage direct current power source B1 with the electric power of the on-vehicle battery B2, the converter 31 (voltage conversion circuit) that performs the voltage conversion of the on-vehicle battery B2 is provided. As described above, since the rated voltage of the on-vehicle battery B2 is higher than the rated voltage of the low-voltage direct current power source B1, the converter 31 is implemented by, for example, a step-down DC/DC converter. The DC/DC converter includes non-insulating types such as chopper types and charge pump types, and insulating types using a transformer. When a circuit to which the electric power is supplied from the on-vehicle battery B2 and a circuit to which the electric power is supplied from the low-voltage direct current power source B1 are preferably electrically insulated from each other, the converter 31 may be an insulating type. The DC/DC converter of an insulating type includes a switching element, and the converter 31 is controlled by a converter control unit 33.

The vehicle 8 may include an AC power socket (alternating current power socket) for supplying the electric power to a general household electric appliance or the like. Such an AC power socket can output an alternating current having a rated voltage of 100 volts to 200 volts. The alternating current power supplied from the AC power socket is generated from the on-vehicle battery B2 using an inverter (not illustrated). Such an inverter also corresponds to the voltage conversion circuit, and when the inverter is provided, the inverter and an inverter control unit that controls the inverter can also be included in the power source module PWR.

As described above, the power source module PWR includes the converter 31 (voltage conversion circuit) that is electrically connected to the on-vehicle battery B2 and performs the voltage conversion of the on-vehicle battery B2, and at least one of the charging circuit for charging the on-vehicle battery B2 from the external power source 30 and the power supply circuit for supplying power from the on-vehicle battery B2 to the outside. In the present embodiment, the charging power supply control unit 34 and the converter control unit 33 are also included in the power source module PWR.

In the example illustrated in Fig. 8, the rotating electrical machine MG is driven and controlled by a rotating electrical machine control unit 35 based on a target torque of the rotating electrical machine MG set according to a command from a vehicle control device 100 which is a host control device. The rotating electrical machine control unit 35 performs switching control of the inverter circuit 36 implemented by a plurality of switching elements to cause the inverter circuit 36 to convert the electric power between a direct current and a multiple-phase (three phases in the present embodiment) alternating current. An operating voltage of the rotating electrical machine control unit 35 is about 3.3 volts to 5 volts, an input and output voltage of the inverter circuit 36 is about 48 volts to 400 volts, and a voltage of a switching control signal of the switching elements implementing the inverter circuit 36 is about 15 volts to 24 volts. Therefore, a driver 38 that amplifies the voltage of the switching control signal output from the rotating electrical machine control unit 35 and increases the driving force to provide the increased driving force to the inverter circuit 36 is provided between the rotating electrical machine control unit 35 and the inverter circuit 36.

The inverter circuit 36 includes the plurality of switching elements. The inverter circuit 36 includes a plurality of sets (here, three sets) of arms for one alternating current phase implemented by a series circuit of an upper stage side switching element on a positive electrode side and a lower stage side switching element on a negative electrode side of a direct current. Each switching element is provided with a freewheel diode with a direction from the negative electrode toward the positive electrode (a direction from the lower stage side toward the upper stage side) as a forward direction. As the switching element, a power semiconductor element such as an insulated gate bipolar transistor (IGBT), a power metal oxide semiconductor field effect transistor (MOSFET), a silicon carbide-metal oxide semiconductor FET (SiC-MOSFET), a sic-static induction transistor (SiC-SIT), and a gallium nitride-MOSFET (GaN-MOSFET) is suitably applied. In the present embodiment, the inverter circuit 36 is implemented as a power module in which the switching elements are integrated together with freewheel diodes.

The inverter module INV includes at least the switching elements implementing the inverter circuit 36. In the present embodiment, the inverter module INV further includes the rotating electrical machine control unit 35 and the driver 38. That is, in the present embodiment, the inverter module INV is implemented including the rotating electrical machine control unit 35, the driver 38, and the inverter circuit 36.

The rotating electrical machine control unit 35 performs current feedback control and controls the rotating electrical machine MG via the inverter circuit 36 based on a rotation position of the rotor 12 (magnetic pole position of permanent magnet), a rotation speed of the rotor 12, and a current flowing through a stator coil of each phrase of the three phases. The rotation position of the rotor 12 is detected by a rotation sensor S1 such as a resolver or an inductive position sensor. The current flowing through the stator coil is detected by a current sensor S2. For example, the current sensor S2 is suitably a non-contact type current sensor provided near a power line such as a bus bar connecting the inverter circuit 36 and the stator coil of the rotating electrical machine MG.

The power source module PWR includes at least the converter 31 (voltage conversion circuit) and the charging power supply circuit 32. In the present embodiment, the converter 31 and the charging power supply circuit 32 are implemented using a common substrate. In the present embodiment, the power source module PWR includes the converter 31, the converter control unit 33, the charging power supply circuit 32, and the charging power supply control unit 34.

In the present embodiment, on a direct current side of the inverter circuit 36, that is, between the inverter circuit 36 and the on-vehicle battery B2, a direct current link capacitor 37 (smoothing capacitor) that smoothes the voltage on the direct current side of the inverter circuit 36 is provided. The inverter module INV may include the direct current link capacitor 37. The inverter module INV may further include a control substrate ECU to be described later.

In the present embodiment, the rotating electrical machine control unit 35 included in the inverter module INV and the converter control unit 33 and the charging power supply control unit 34 included in the power source module PWR are formed on the same single substrate to implement the control substrate ECU. The control substrate ECU can also be referred to as an integrated control substrate in which functions of a plurality of control units are integrated.

The driver 38 is disposed on the upper side Z1 in the up-down direction Z of the inverter circuit 36. The control substrate ECU is disposed across the rotating electrical machine control unit 35, the converter control unit 33, and the charging power supply control unit 34. Generally, the control substrate ECU is disposed such that the inverter circuit 36, the driver 38, and the rotating electrical machine control unit 35 overlap, the converter 31 and the converter control unit 33 overlap, and the charging power supply circuit 32 and the charging power supply control unit 34 overlap as viewed in the up-down direction. In the present embodiment, as illustrated in Figs. 2 to 6, the power source module PWR is disposed adjacent to the inverter module INV on the axial direction first side L1. The control substrate ECU is disposed across the rotating electrical machine control unit 35, the converter control unit 33, and the charging power supply control unit 34 along the axial direction L. As illustrated in Figs. 2 to 6, the control substrate ECU is disposed between the inverter circuit 36 (switching elements) and the refrigerant circuit module 46 to be described later in the up-down direction Z.

As illustrated in Figs. 3 and 4, the first case portion 21 is provided with connectors 39 for electrically connecting a cable (not illustrated) disposed outside the case 20 to the inverter module INV, the power source module PWR, or the control substrate ECU. In the illustrated example, the connector 39 is disposed in a through hole formed in a wall portion of the second side wall portion 27 of the first case portion 21 on the front-rear direction second side H2. The plurality of connectors 39 (specifically, five connectors 39) are arranged to be aligned along the axial direction L. The connector 39 is connected to, for example, a cable for transmitting a control signal to the control substrate ECU, a cable for supplying the electric power to the control substrate ECU, a cable for supplying the electric power to the inverter circuit 36, and a cable for supplying the electric power to the charging power supply circuit 32.

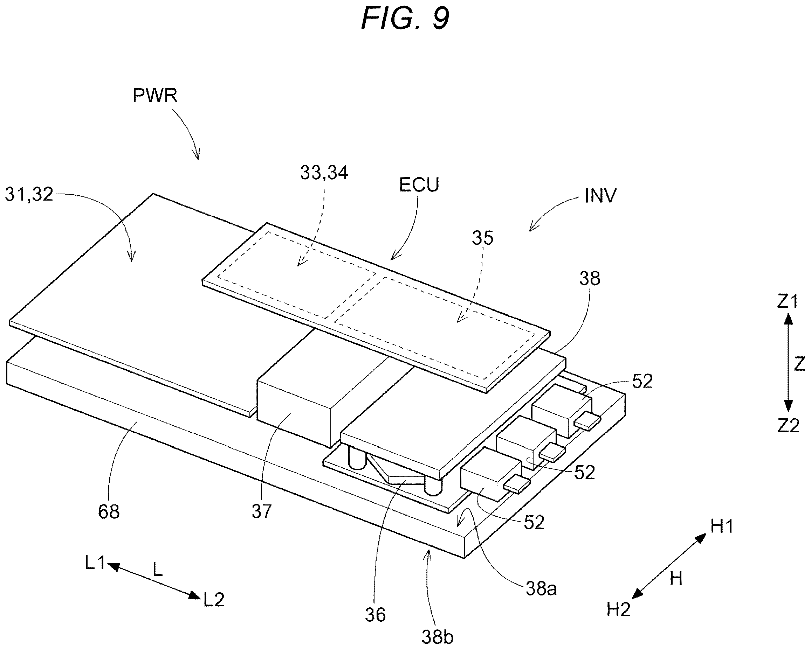

Fig. 9 is a perspective view illustrating an example of arrangements of the control substrate ECU, the inverter module INV, the power source module PWR, and a cooling unit 68. When the rotating electrical machine MG is driven, a large current flows through the switching elements implementing the inverter circuit 36, and the switching elements generate heat. Therefore, a heat generation amount of the inverter circuit 36 including the plurality of switching elements is large. The inverter circuit 36 is cooled by the cooling unit 68 to be described later.

The vehicle driving device 10 includes the cooling unit 68 that performs heat exchange between the inverter module INV and a coolant Q1. The cooling in the cooling unit 68 includes an aspect of direct heat exchange between a cooling target site and the coolant Q1 and an aspect of heat exchange with the coolant Q1 via a heat transfer medium such as an oil OL or a heat sink. In the present embodiment, a cooling unit first surface 68a, which is an upper surface of the cooling unit 68 in contact with the cooling target site, is cooled by the heat exchange with the coolant Q1 flowing in the cooling unit 68. Examples of the "coolant Q1" include antifreeze, water, and oils. The coolant Q1 corresponds to a "first refrigerant". The cooling unit 68 corresponds to a "first heat exchanger".

As illustrated in Fig. 9, in the present embodiment, the inverter circuit 36 (switching elements), the direct current link capacitor 37, the converter 31, and the charging power supply circuit 32 are attached to the cooling unit first surface 68a, which is the upper surface of the cooling unit 68. The direct current link capacitor 37 that smoothes a direct current voltage causing pulsation generates heat by an input and output of the current. The converter 31 includes the switching elements, and the switching elements also generate heat by the flowing current during the switching operation. The charging power supply circuit 32 also generates heat because a current is supplied from the external power source 30 to charge the on-vehicle battery B2. The cooling unit 68 includes a part of a coolant path 65 to be described later. These heat generation members are appropriately cooled by being attached to the cooling unit first surface 68a. The inverter circuit 36 has the largest heat generation amount and reaches the highest temperature.

As illustrated in Figs. 2 to 4, in the present embodiment, the power source module PWR is attached to a cooling unit second surface 68b, which is a lower surface of the cooling unit 68. The inverter module INV may be attached to the cooling unit second surface 68b. That is, the power source module PWR or the inverter module INV may be attached to both the cooling unit first surface 68a and the cooling unit second surface 68b. In the illustrated example, the cooling unit 68 is provided such that the coolant Q1 flows from an inverter module INV side to a power source module PWR side. The cooling unit 68 may be provided such that the coolant Q1 flows from the power source module PWR side to the inverter module INV side.

When the converter 31 and the charging power supply circuit 32 included in the power source module PWR are both of a transformer type, it is suitable to share a transformer component that tends to be large in size. Similarly to the direct current link capacitor 37, the transformer is also a component that is relatively resistant to heat. Therefore, it is suitable that the transformer is disposed on the lower side Z2 with respect to the cooling unit 68 and at a position overlapping the power transmission mechanism GT as viewed in the up-down direction. By effectively utilizing the space on the lower side Z2 with respect to the cooling unit 68 in this way, it is easy to downsize the entire vehicle driving device 10. In the examples illustrated in Figs. 3 and 4, capacitors 131 included in the power source module PWR are disposed on the upper side Z1 with respect to the cooling unit 68. A transformer 132 included in the power source module PWR is disposed on the lower side Z2 with respect to the cooling unit 68.

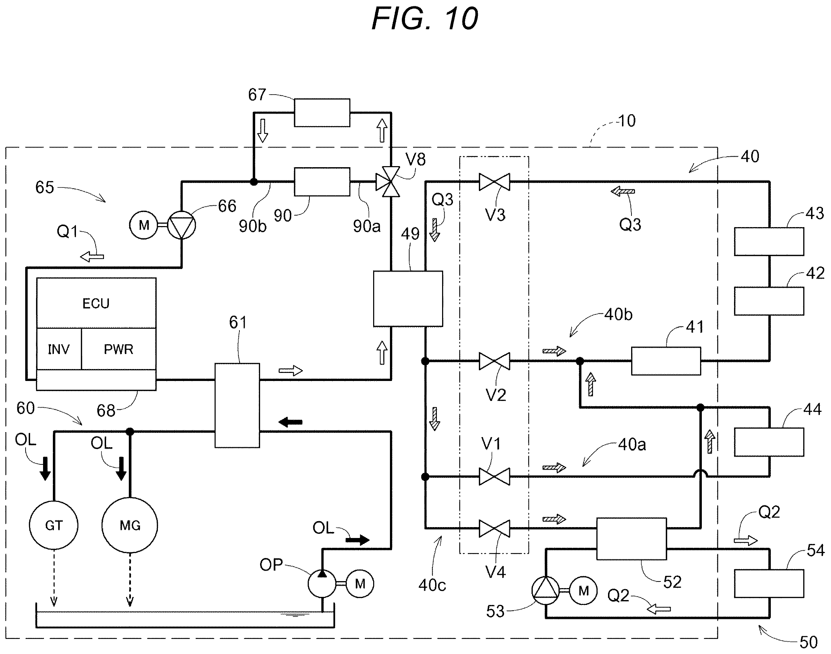

Fig. 10 is a diagram schematically illustrating an oil path 60 and the coolant path 65. The vehicle driving device 10 includes the coolant path 65 through which the coolant Q1 flows. In the present embodiment, the coolant path 65 is a liquid path of the coolant Q1 provided in the case 20. The coolant path 65 corresponds to a "first refrigerant circuit" through which the coolant Q1 circulates.

The coolant path 65 is provided with an oil cooler 61 that performs heat exchange between the coolant Q1 and the oil OL. The coolant path 65 is provided with a first refrigerant pump 66. The coolant path 65 is provided with a radiator 67 that performs heat exchange between the coolant Q1 and the outside air. The coolant path 65 is provided with a condenser 49 to be described later. In the illustrated example, the first refrigerant pump 66 is disposed upstream of the oil cooler 61, but may be disposed downstream of the oil cooler 61. In the illustrated example, the first refrigerant pump 66 is disposed downstream of the radiator 67 in the coolant path 65, but may be disposed upstream of the radiator 67. In the illustrated example, the cooling unit 68 is provided upstream of the oil cooler 61. The oil cooler 61 corresponds to a "second heat exchanger".

The vehicle driving device 10 includes a third refrigerant circuit 40 through which a third refrigerant Q3 circulates. The condenser 49 is connected to the third refrigerant circuit 40. In the condenser 49, heat exchange between the third refrigerant Q3 and the coolant Q1 is performed. The third refrigerant circuit 40 includes a third refrigerant first path 40a including a flow path of the third refrigerant Q3 from the condenser 49 to an evaporator 44, a third refrigerant second path 40b including a flow path of the third refrigerant Q3 from a compressor 42 to the condenser 49, and a third refrigerant third path 40c including a flow path of the third refrigerant Q3 including a chiller 52. For example, the third refrigerant Q3 flowing through the third refrigerant first path 40a is lower in temperature than the third refrigerant second path 40b and the third refrigerant third path 40c. For example, the third refrigerant Q3 flowing through the third refrigerant third path 40c is lower in temperature than the third refrigerant second path 40b. In the present embodiment, the third refrigerant Q3 is a refrigerant for an on-vehicle air conditioner. In the present embodiment, the condenser 49 is a water-cooled condenser. The condenser 49 corresponds to a "third heat exchanger".

A part of the flow paths implementing the third refrigerant circuit 40 may be formed by using the first cover portion 23 (see Fig. 2) of the case 20. For example, control valves V (a first valve V1, a second valve V2, a third valve V3, and a fourth valve V4) that control a flow rate or the flow path of the third refrigerant Q3 in the third refrigerant circuit 40 are attached to a first cover first surface 23a of the first cover portion 23. Further, for example, an accumulator 41, the condenser 49, and the chiller 52 are attached to a first cover second surface 23b of the first cover portion 23.

As illustrated in Fig. 2, the vehicle driving device 10 includes the refrigerant circuit module 46. The refrigerant circuit module 46 implements at least a part of the third refrigerant circuit 40. In the present embodiment, the refrigerant circuit module 46 is implemented by the third refrigerant circuit 40 and the control valves V formed in the first cover portion 23. As illustrated in Figs. 2 to 4, the refrigerant circuit module 46 is disposed on the upper side Z1 in the up-down direction Z with respect to the inverter module INV and the power source module PWR and at a position overlapping the inverter module INV and the power source module PWR as viewed in the up-down direction. As illustrated in Figs. 2 to 4, the refrigerant circuit module 46 is integrally fixed to the case 20.

Here, a portion of the first cover portion 23 in which the third refrigerant circuit 40 is formed is referred to as a refrigerant manifold 47. The refrigerant manifold 47 is provided with the condenser 49 (see Fig. 10) for cooling the third refrigerant Q3 by the heat exchange with the coolant Q1 as a functional component implementing the third refrigerant circuit 40.

The refrigerant circuit module 46 includes the refrigerant manifold 47 implementing the flow path of the third refrigerant Q3 in the third refrigerant circuit 40 and the control valves V attached to the refrigerant manifold 47. It is sufficient that the refrigerant circuit module 46 implements at least a part of the third refrigerant circuit 40 in which the third refrigerant Q3 circulates, and in addition to the refrigerant manifold 47, the refrigerant circuit module 46 may also include the accumulator 41, the condenser 49, and the chiller 52 as well as the control valves V.

In the examples illustrated in Figs. 3 to 6, the refrigerant manifold 47 is provided with connection portions 48 of pipes for connecting the refrigerant manifold 47 and functional components that are not integrated with the vehicle driving device 10, such as the evaporator 44 and a cabin capacitor 43. Preferably, similarly to the control valves V, the connection portions 48 are suitably formed on the first cover first surface 23a.

As illustrated in Fig. 10, the third refrigerant circuit 40 is formed with a path (third refrigerant first path 40a) from the condenser 49 to the accumulator 41 via the first valve V1 through the evaporator 44 and a path (third refrigerant second path 40b) from the condenser 49 to the accumulator 41 via the second valve V2 and then returning to the condenser 49 via the compressor 42, the cabin capacitor 43, and the third valve V3.

The evaporator 44 is a functional component serving as a core of cooling, and vaporizes the third refrigerant Q3 to remove heat from the surroundings and release cold air into a vehicle interior. The accumulator 41 separates a liquid from the third refrigerant Q3 in which a gas and the liquid are mixed, and supplies only the gas (third refrigerant gas) to the compressor 42. The compressor 42 compresses the third refrigerant gas having a relatively low temperature and a relatively low pressure to a high temperature and a high pressure. The cabin capacitor 43 is a heat source for heating by a heat pump system and releases the heat condensed by the compressor 42 into the vehicle interior. The third refrigerant Q3 leaving the cabin capacitor 43 flows to the condenser 49 via the third valve V3 which is an expansion valve.

The compressor 42, the cabin capacitor 43, and the evaporator 44 described above are included in a cabin air conditioning unit that adjusts the temperature and the amount of air during cooling and heating in the on-vehicle air conditioner and selects a blowout port.

In the present embodiment, the on-vehicle battery B2 is cooled by heat exchange between a battery heat sink 54 and the second refrigerant Q2, and the second refrigerant Q2 whose temperature is increased is cooled by heat exchange with the third refrigerant Q3 at the chiller 52. Therefore, the third refrigerant third path 40c is formed as a path through which the third refrigerant Q3 passes from the condenser 49 to the accumulator 41 via the fourth valve V4 and the chiller 52.

A second refrigerant circuit 50 in which the second refrigerant Q2 leaving the chiller 52 returns to the chiller 52 via the battery heat sink 54 and a second refrigerant pump 53 is connected to the chiller 52. The chiller 52 performs heat exchange between the second refrigerant Q2 and the third refrigerant Q3. For example, the second refrigerant Q2 whose temperature is increased by the heat exchange with the battery heat sink 54 is cooled by the chiller 52. Since the second refrigerant circuit 50 for cooling the on-vehicle battery B2 and the third refrigerant third path 40c for cooling the second refrigerant Q2 flowing through the second refrigerant circuit 50 are provided, a restriction of input and output currents to the on-vehicle battery B2 is easily alleviated even when the current flowing through the on-vehicle battery B2 increases and the temperature of the on-vehicle battery B2 rises, for example, at the time of rapid charging or high-speed traveling. Examples of the "second refrigerant Q2" include antifreeze, water, and oils. The chiller 52 corresponds to a "fourth heat exchanger".

The coolant path 65 is provided with an on-vehicle device 90 that uses the heat of the coolant Q1. In the present embodiment, examples of the on-vehicle device 90 include a heat exchanger for a cabin heater and a heat exchanger for warming an electronic device such as the low-voltage direct current power source B1 and the on-vehicle battery B2 during cold weather or the like. The chiller 52, the battery heat sink 54, and the like may be connected to the coolant path 65 to use the heat of the coolant Q1, and the condenser 49 may use the heat of the coolant Q1. In such a case, the condenser 49, the chiller 52, and the battery heat sink 54 function as the on-vehicle device 90 that uses the heat of the coolant Q1.

In the present embodiment, the coolant path 65 is provided with a switching valve V8 that causes the coolant Q1 to flow to either the radiator 67 or the on-vehicle device 90. When it is necessary to cool the coolant Q1, for example, when there is no need to use the heat of the coolant Q1 by the on-vehicle device 90, the coolant Q1 flows into the radiator 67 by the switching valve V8. However, when there is no need to cool the coolant Q1 during cold weather or the like, when the heat of the coolant Q1 is used by the on-vehicle device 90, the coolant Q1 flows into the on-vehicle device 90 by the switching valve V8 without passing through the radiator 67.

The vehicle driving device 10 includes the oil path 60 through which the oil OL flows. In the present embodiment, the oil path 60 is an oil path provided in the case 20. In the vehicle driving device 10, the rotating electrical machine MG and the power transmission mechanism GT are often lubricated or cooled by the oil OL, and the vehicle driving device 10 of the present embodiment is also lubricated by the oil OL accommodated in the second accommodation chamber E2. For example, the oil OL accumulated in an oil reservoir formed on the lower side Z2 of the case 20 is scooped up by an oil pump OP or a gear of the power transmission mechanism GT to be supplied to a lubrication target portion, such as a bearing of each gear, and a cooling target portion, such as a bearing of the rotor shaft 13 and the coil end portion 11b.

The oil path 60 includes the first accommodation chamber E1. The oil path 60 includes a flow path formed in a wall of the case 20 or a rotary shaft of the rotary member and a flow path formed by a pipe disposed in the case 20. In the illustrated example, the oil path 60 has a path in which the oil OL is branched and supplied to the rotating electrical machine MG or the power transmission mechanism GT, and may have, for example, a path in which the oil OL supplied to the rotating electrical machine MG is supplied to the power transmission mechanism GT. A path in which the oil OL supplied to the power transmission mechanism GT is supplied to the rotating electrical machine MG may be used. Examples of the "oil OL" include an automatic transmission fluid (ATF) and a gear oil.

Fig. 11 is an example of the vehicle body 80 included in the vehicle 8. Examples of a structure of the vehicle body 80 include a ladder frame structure and a monocoque structure in which a frame member and a body are integrally formed. In the present embodiment, the vehicle body 80 is a frame that supports each part of the vehicle 8, and may be a monocoque body, a ladder frame, or a subframe.

The vehicle driving device 10 includes the mount member 70 coupled to a frame member 81 implementing the vehicle body 80 in the on-vehicle state. The case 20 is hung on the frame member 81 via the mount member 70 in the on-vehicle state. In the present embodiment, the vehicle driving device 10 includes a pair of the mount members 70. The pair of mount members 70 are spaced apart from each other in the width direction (axial direction L). Examples of the frame member 81 include side members that are left and right side members of the vehicle body 80, a cross member that couples the left and right side members, a cross member of a ladder frame, a floor portion of a monocoque body, a cross member of a floor portion, a cross member on a vehicle front side, and a cross members on a vehicle rear side.

Returning to Fig. 6, the vehicle driving device 10 includes the mount bracket 72 that is coupled to the vehicle body 80 of the vehicle 8 in the on-vehicle state. In the present embodiment, the vehicle driving device 10 includes a pair of the mount brackets 72. The pair of mount brackets 72 are disposed at positions not overlapping the second accommodation chamber E2 as viewed in the up-down direction in the on-vehicle state. The mount bracket 72 is attached to the second case portion 22. In the present embodiment, the pair of mount members 70 each include the mount bush 71 and the mount bracket 72. The mount bracket 72 is fixed to the second case portion 22.

In the present embodiment, the mount member 70 includes the mount bush 71 disposed between the frame member 81 and the mount bracket 72. The pair of mount brackets 72 are coupled to a cross member. Here, the "cross member" is the frame member 81 extending in the width direction (axial direction L) in the vehicle body 80.

The vehicle driving device 10 includes the auxiliary mount bracket 74 disposed on the lower side Z2 with respect to the pair of mount brackets 72 and coupled to the vehicle body 80 in the on-vehicle state. The auxiliary mount bracket 74 is attached to the first case portion 21. In the present embodiment, the auxiliary mount bracket 74 is coupled to the cross member (frame member 81) extending in the width direction (axial direction L) in the vehicle body 80.

The vehicle driving device 10 includes the auxiliary mount member 75 coupled to the frame member 81 implementing the vehicle body 80 in the on-vehicle state. The auxiliary mount member 75 includes the auxiliary mount bush 73 disposed between the frame member 81 and the auxiliary mount bracket 74. The mount bush 71 and the auxiliary mount bush 73 absorb, for example, vibration from the vehicle driving device 10 to the cabin and an impact from a road surface to the vehicle driving device 10.

One end portion of the auxiliary mount bracket 74 is attached to the first case portion 21, and the other end portion of the auxiliary mount bracket 74 is coupled to the vehicle body 80. The auxiliary mount bracket 74 is formed such that a straight line connecting one end portion and the other end portion intersects a straight line connecting the pair of mount brackets 72 as viewed in the up-down direction. In the present embodiment, the auxiliary mount bush 73 is attached to the other end portion of the auxiliary mount bracket 74. Further, the auxiliary mount bracket 74 is formed such that the straight line connecting one end portion and the other end portion is along the front-rear direction H.

In the present embodiment, the auxiliary mount bracket 74 is swingably attached around a predetermined axis center. In the example illustrated in Fig. 7, one end portion of the auxiliary mount brackets 74 is attached to the first case portion 21 while being sandwiched in the up-down direction Z between the first case portion 21 and an attachment member 76 attached to the first case portion 21. One end portion of the auxiliary mount bracket 74 is swingably attached to the first case portion 21 around an axis center X2 along the up-down direction Z. The attachment member 76 is fixed to the first case portion 21.

In the present embodiment described above, the vehicle driving device 10 includes the first case portion 21 in which the rotating electrical machine MG and the power transmission mechanism GT are accommodated, the second case portion 22 in which at least one of the inverter module INV and the power source module PWR is accommodated, and the mount bracket 72 coupled to the vehicle body 80 of the vehicle 8 in the on-vehicle state which is a state of being mounted on the vehicle 8. In the on-vehicle state, the second case portion 22 is disposed on the upper side Z1 with respect to the first case portion 21, and the mount bracket 72 is attached to the second case portion 22.

According to the vehicle driving device 10 described above, since the mount bracket 72 is attached to the second case portion 22 disposed on the upper side Z1 with respect to the first case portion 21 in the on-vehicle state, the dimension of the mount bracket 72 in the up-down direction Z is easily reduced even when the vehicle driving device 10 is attached to a portion of the vehicle body 80 disposed on the upper side Z1 with respect to the rotating electrical machine MG and the power transmission mechanism GT. Therefore, it is easy to reduce the size and weight of the mount bracket 72 while ensuring the strength of the mount bracket 72. Even when the output member is disposed at a position close to the rotating electrical machine MG and the power transmission mechanism GT and there is no sufficient space for the mount bracket 72 on both sides of the first case portion 21 in the axial direction L, it is easy to ensure a space in which necessary strength for the mount bracket 72 is obtained by attaching the mount bracket 72 to the second case portion 22.

In the present embodiment, the second case portion 22 includes a side wall portion (second side wall portion 27) extending in the up-down direction Z and surrounding an accommodation chamber (second accommodation chamber E2) in which the inverter module INV and the power source module PWR are accommodated as viewed in the up-down direction in the on-vehicle state, the boss portion 27b is provided on each of a pair of outer surfaces facing opposite sides with the accommodation chamber (second accommodation chamber E2) sandwiched therebetween in the side wall portion (second side wall portion 27), and the mount bracket 72 is attached to each of the pair of boss portions 27b.

According to the vehicle driving device 10 described above, the mount bracket 72 can be appropriately attached to the second case portion 22. Further, since the pair of mount brackets 72 are disposed on opposite sides with the accommodation chamber (the second accommodation chamber E2) sandwiched therebetween, it is easy to ensure a wide support interval by the pair of mount brackets 72. Therefore, it is easy to stabilize the support of the vehicle driving device 10.

In the present embodiment, the vehicle driving device 10 includes a pair of the mount brackets 72, the second case portion 22 includes the accommodation chamber (second accommodation chamber E2) in which the inverter module INV and the power source module PWR are accommodated, an opening portion (first opening portion 20a) of the accommodation chamber (second accommodation chamber E2) that is opened toward the upper side Z1, and a cover portion (first cover portion 23) that covers the opening portion (first opening portion 20a), and as viewed in the up-down direction in the on-vehicle state, the accommodation chamber (second accommodation chamber E2) is disposed at a position overlapping with the rotating electrical machine MG and the power transmission mechanism GT which are accommodated in the first case portion 21, and the pair of mount brackets 72 are disposed at positions not overlapping the accommodation chamber (second accommodation chamber E2).

According to the vehicle driving device 10 described above, since the rotating electrical machine MG and the power transmission mechanism GT having a relatively large weight are disposed at positions overlapping the accommodation chamber (second accommodation chamber E2), and the pair of mount brackets 72 are disposed on an outer side not overlapping the accommodation chamber (second accommodation chamber E2) as viewed in the up-down direction, the vehicle driving device 10 is easily supported by the pair of mount brackets 72. Further, according to the present configuration, when the cover portion (first cover portion 23) is removed and the assembly work of the member from the opening portion (first opening portion 20a) into the accommodation chamber (second accommodation chamber E2) and the maintenance work in the accommodation chamber (second accommodation chamber E2) are performed, the pair of mount brackets 72 can be prevented from becoming an obstruction. Therefore, workability in the accommodation chamber (second accommodation chamber E2) of the vehicle driving device 10 is easily ensured.

In the present embodiment, the vehicle driving device 10 includes a pair of the mount brackets 72, and further includes the auxiliary mount bracket 74 disposed on the lower side Z2 with respect to the pair of mount brackets 72 and coupled to the vehicle body 80 in the on-vehicle state, in which the auxiliary mount bracket 74 is attached to the first case portion 21, and with a direction orthogonal to a traveling direction of the vehicle 8 as a width direction (axial direction L) as viewed in the up-down direction, the pair of mount brackets 72 are attached to a cross member (frame member 81) extending in the width direction (axial direction L) of the vehicle body 80.

According to the vehicle driving device 10 described above, since the vehicle driving device 10 can be supported by the vehicle body 80 at two points at the upper portion and at least one point at the lower portion, it is easy to stabilize the support of the vehicle driving device 10.

### Other Embodiments

Next, other embodiments of the vehicle driving device 10 will be described.
(1) In the embodiment described above, for example, a configuration is described in which the power transmission mechanism GT includes the speed reducer 16 and the differential gear mechanism 15. However, the embodiment disclosed here is not limited to such an example, and an aspect may be used in which the power transmission mechanism GT includes only the differential gear mechanism 15 without including the speed reducer 16. For example, a configuration may be used in which the power transmission mechanism GT includes only the speed reducer 16 without including the differential gear mechanism 15, and transmits power from one rotating electrical machine MG to one wheel. For example, the speed reducer 16 may not be a planetary gear mechanism having a fixed speed ratio, and the speed reducer 16 may be a speed reduction mechanism having a speed ratio of multiple stages. Further, for example, the power transmission mechanism GT may have a configuration of multiple-shaft such as two-shaft or three-shaft instead of a single-shaft configuration.
(2) In the embodiment described above, for example, a configuration is described in which the mount bracket 72 is attached to the boss portion 27b provided on the second side wall portion 27 of the second case portion 22. However, the embodiment disclosed here is not limited to such an example, and for example, the mount bracket 72 may be attached to the first cover portion 23 of the second case portion 22. The mount bracket 72 may be attached to the second case portion 22 by welding, caulking, brazing, or the like, instead of fastening by bolts. The second case portion 22 and the mount bracket 72 may be integrally formed.
(3) In the embodiment described above, for example, a configuration is described in which the second case portion 22 includes the first opening portion 20a opened toward the upper side Z1 and the first cover portion 23. However, the embodiment disclosed here is not limited to such an example, and the second case portion 22 may be opened in the axial direction L or the front-rear direction H instead of the upper side Z1. The second case portion 22 may not include the first cover portion 23. For example, the second accommodation chamber E2 may not be disposed at a position overlapping the rotating electrical machine MG and the power transmission mechanism GT as viewed in the up-down direction in the on-vehicle state. For example, the pair of mount brackets 72 may be disposed at positions overlapping the second accommodation chamber E2 as viewed in the up-down direction.
(4) In the embodiment described above, for example, a configuration is described in which the vehicle driving device 10 includes the pair of mount brackets 72, and the pair of mount brackets 72 are attached to the cross member (frame member 81) extending in the width direction (axial direction L) in the vehicle body 80. However, the embodiment described here is not limited to such an example, and for example, the mount bracket 72 may be attached to the frame member 81 extending in the front-rear direction H in the vehicle body 80. For example, the vehicle driving device 10 may include only one or three or more mount brackets 72.
(5) In the embodiment described above, for example, a configuration is described in which the auxiliary mount bracket 74 is attached to the cross member (frame member 81) extending in the width direction (axial direction L) in the vehicle body 80. However, the embodiment described here is not limited to such an example, and for example, the auxiliary mount bracket 74 may be attached to the frame member 81 extending in the front-rear direction H in the vehicle body 80. For example, the vehicle driving device 10 may include a plurality of auxiliary mount brackets 74. For example, the vehicle driving device 10 may not include the auxiliary mount bracket 74.
(6) In the embodiment described above, for example, a configuration is described in which the power source module PWR includes the converter 31 and the charging power supply circuit 32. However, the embodiment described here is not limited to such an example, and for example, the power source module PWR may not include the converter 31 or the charging power supply circuit 32.
(7) In the embodiment described above, for example, a configuration is described in which the mount bracket 72 is fixed to the second case portion 22, and the auxiliary mount bracket 74 is swingably attached to the first case portion 21 around the axis center X2. However, the embodiment described here is not limited to such an example, and for example, the mount bracket 72 may be swingably attached to the second case portion 22 around a predetermined axis center. The auxiliary mount bracket 74 may be fixed to the second case portion 22. The vehicle driving device 10 may not include the mount bush 71 or the auxiliary mount bush 73.
(8) The principles, preferred embodiment and mode of operation of the present invention have been described in the foregoing specification. However, the invention which is intended to be protected is not to be construed as limited to the particular embodiments disclosed, but is limited by the claims. Further, the embodiments described herein are to be regarded as illustrative rather than restrictive. Variations and changes may be made by others, and equivalents employed, without departing from the scope of the claims. Accordingly, it is expressly intended that all such variations, changes and equivalents which fall within the scope of the present invention as defined in the claims, be embraced thereby.

It is explicity stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle driving device (10) comprising:
a rotating electrical machine (MG);
an output member configured to be drivingly coupled to a wheel (W1, W2);
a power transmission mechanism (GT) configured to transmit a driving force between the rotating electrical machine (MG) and the output member;
an inverter module (INV) configured to drive and control the rotating electrical machine;
a power source module (PWR) including at least one of a voltage conversion circuit (31) electrically connected to an on-vehicle battery (B2) and configured to perform voltage conversion of the on-vehicle battery (B2), a charging circuit (32) configured to charge the on-vehicle battery (B2) from an external power source (30), and a power supply circuit (32) configured to supply power from the on-vehicle battery (B2) to an outside;
a first case portion (21) in which the rotating electrical machine (MG) and the power transmission mechanism (GT) are accommodated;
a second case portion (22) in which at least one of the inverter module (INV) and the power source module (PWR) are accommodated; and
a mount bracket (72) configured to be coupled to a vehicle body (80) of a vehicle (8) in an on-vehicle state that is a state of being mounted on the vehicle (8), wherein
in the on-vehicle state, the second case portion (22) is disposed on an upper side (Z1) with respect to the first case portion (21), **characterized in that**
the mount bracket (72) is attached to the second case portion (22).

2. The vehicle driving device (10) according to claim 1, wherein
the second case portion (22) includes a side wall portion (27) extending in an up-down direction (Z) and surrounding an accommodation chamber (E2) in which the inverter module (INV) and the power source module (PWR) are accommodated as viewed in the up-down direction in the on-vehicle state,
a boss portion (27b) is provided on each of a pair of outer surfaces facing opposite sides with the accommodation chamber (E2) sandwiched therebetween in the side wall portion (27), and
the mount bracket (72) is attached to each of a pair of the boss portions (27b).

3. The vehicle driving device (10) according to claim 1 or 2, further comprising:
a pair of the mount brackets (72), wherein
the second case portion (22) includes an accommodation chamber (E2) in which the inverter module (INV) and the power source module (PWR) are accommodated, an opening portion (20a) of the accommodation chamber (E2) that is opened toward the upper side (Z1), and a cover portion (23) that covers the opening portion (20a), and
as viewed in an up-down direction in the on-vehicle state,
the accommodation chamber (E2) is disposed at a position overlapping the rotating electrical machine (MG) and the power transmission mechanism (GT) which are accommodated in the first case portion (21), and
the pair of mount brackets (72) are disposed at positions not overlapping the accommodation chamber (E2).

4. The vehicle driving device (10) according to any one of claims 1 to 3, further comprising:
an auxiliary mount bracket (74) disposed on a lower side (Z2) with respect to a pair of the mount brackets (72) and coupled to the vehicle body (80) in the on-vehicle state while including the pair of mount brackets (72), wherein
the auxiliary mount bracket (74) is attached to the first case portion (21), and
with a direction orthogonal to a traveling direction of the vehicle (8) as a width direction as viewed in an up-down direction, the pair of mount brackets (72) are attached to a cross member (81) extending in the width direction in the vehicle body (80).

## Patentansprüche

1. Fahrzeugantriebsvorrichtung (10) mit:
einer rotierenden elektrischen Maschine (MG);
einem Ausgangsbauteil, das dazu ausgebildet ist, antreibbar an ein Rad (W1, W2) gekoppelt zu werden;
einem Leistungsübertragungsmechanismus (GT), der dazu ausgebildet ist, eine Antriebskraft zwischen der rotierenden elektrischen Maschine (MG) und dem Ausgangsbauteil zu übertragen;
einem Wechselrichtermodul (INV), das dazu ausgebildet ist, die rotierende elektrische Maschine anzusteuern und zu steuern;
einem Leistungsquellemodul (PWR) mit mindestens einer einer Spannungsumwandlungsschaltung (31), die mit einem Fahrzeugakku (B2) elektrisch verbunden ist und dazu ausgebildet ist, Spannungsumwandlung des Fahrzeugakkus (B2) durchzuführen, einer Ladeschaltung (32), die dazu ausgebildet ist, den Fahrzeugakku (B2) von einer externen Leistungsquelle (30) zu laden, und einer Leistungszufuhrschaltung (32), die dazu ausgebildet ist, Leistung von dem Fahrzeugakku (B2) einer Außenseite zuzuführen;
einem ersten Gehäuseabschnitt (21), in dem die rotierende elektrische Maschine (MG) und der Leistungsübertragungsmechanismus (GT) aufgenommen sind;
einem zweiten Gehäuseabschnitt (22), in dem mindestens eines von dem Wechselrichtermodul (INV) und dem Leistungsquellemodul (PWR) aufgenommen ist; und
einer Montierungshalterung (72), die dazu ausgebildet ist, an einen Fahrzeugkörper (80) eines Fahrzeugs (8) in einem Fahrzeugmontierungszustand, der ein Zustand einer Montierung an dem Fahrzeug (8) ist, gekoppelt zu werden, bei der
in dem Fahrzeugmontierungszustand der zweite Gehäuseabschnitt (22) auf einer oberen Seite (Z1) in Bezug auf den ersten Gehäuseabschnitt (21) angeordnet ist, **dadurch gekennzeichnet, dass**
die Montierungshalterung (72) an dem zweiten Gehäuseabschnitt (22) angebracht ist.

2. Fahrzeugantriebsvorrichtung (10) nach Anspruch 1, bei der
der zweite Gehäuseabschnitt (22) einen Seitenwandabschnitt (27) aufweist, der sich in dem Fahrzeugmontierungszustand in einer Oben-unten-Richtung (Z) erstreckt und eine Aufnahmekammer (E2), in der das Wechselrichtermodul (INV) und das Leistungsquellemodul (PWR) aufgenommen sind, in der Oben-unten-Richtung betrachtet umgibt,
ein Vorsprungabschnitt (27b) auf jeder eines Paares äußerer Oberflächen, die gegenüberliegenden Seiten mit der Aufnahmekammer (E2) sandwichartig dazwischen eingefügt zugewandt sind, in dem Seitenwandabschnitt (27) vorgesehen ist, und
die Montierungshalterung (72) an jedem eines Paares der Vorsprungabschnitte (27b) angebracht ist.

3. Fahrzeugantriebsvorrichtung (10) nach Anspruch 1 oder 2, ferner mit:
einem Paar der Montierungshalterungen (72), bei der
der zweite Gehäuseabschnitt (22) eine Aufnahmekammer (E2), in der das Wechselrichtermodul (INV) und das Leistungsquellemodul (PWR) aufgenommen sind, einen Öffnungsabschnitt (20a) der Aufnahmekammer (E2), der in Richtung der oberen Seite (Z1) geöffnet ist, und einen Abdeckungsabschnitt (23), der den Öffnungsabschnitt (20a) bedeckt, aufweist, und
in dem Fahrzeugmontierungszustand in einer Oben-unten-Richtung betrachtet
die Aufnahmekammer (E2) an einer Position angeordnet ist, die die rotierende elektrische Maschine (MG) und den Leistungsübertragungsmechanismus (GT), die in dem ersten Gehäuseabschnitt (21) aufgenommen sind, überlappt, und
das Paar Montierungshalterungen (72) an Positionen angeordnet ist, die die Aufnahmekammer (E2) nicht überlappen.

4. Fahrzeugantriebsvorrichtung (10) nach einem der Ansprüche 1 bis 3, ferner mit:
einer Hilfsmontierungshalterung (74), die auf einer unteren Seite (Z2) in Bezug auf ein Paar der Montierungshalterungen (72) angeordnet und an den Fahrzeugkörper (80) in dem Fahrzeugmontierungszustand gekoppelt ist, während sie das Paar Montierungshalterungen (72) aufweist, bei der
die Hilfsmontierungshalterung (74) an dem ersten Gehäuseabschnitt (21) angebracht ist, und
in einer Oben-unten-Richtung betrachtet mit einer Richtung orthogonal zu einer Fahrtrichtung des Fahrzeugs (8) als eine Breitenrichtung das Paar Montierungshalterungen (72) an einem Querbauteil (81), das sich in der Breitenrichtung erstreckt, in dem Fahrzeugkörper (80) angebracht ist.

## Revendications

1. Dispositif d'entraînement de véhicule (10) comprenant :
une machine électrique tournante (MG) ;
un élément de sortie configuré pour être couplé à une roue (W1, W2) ;
un mécanisme de transmission de puissance (GT) configuré pour transmettre une force motrice entre la machine électrique tournante (MG) et l'élément de sortie ;
un module onduleur (INV) configuré pour entraîner et contrôler la machine électrique tournante ;
un module source d'énergie (PWR) comprenant au moins un des éléments parmi un circuit de conversion de tension (31) connecté électriquement à une batterie montée (B2) sur le véhicule et configuré pour effectuer la conversion de tension de la batterie (B2) montée sur le véhicule, un circuit de charge (32) configuré pour charger la batterie (B2) montée sur le véhicule à partir d'une source d'énergie externe (30), et un circuit d'alimentation (32) configuré pour fournir de l'énergie de la batterie (B2) montée sur le véhicule à une source extérieure ;
une première partie de boîtier (21) dans laquelle sont logés la machine électrique tournante (MG) et le mécanisme de transmission de puissance (GT) ;
une deuxième partie de boîtier (22) dans laquelle au moins un élément parmi le module onduleur (INV) et le module source d'énergie (PWR) sont logés ; et
un support de montage (72) configuré pour être couplé à un corps de véhicule (80) d'un véhicule (8) dans un état monté sur le véhicule c'est-à-dire un état dans lequel il est monté sur le véhicule (8), dans lequel
dans l'état monté sur le véhicule, la deuxième partie de boîtier (22) est disposée sur un côté supérieur (Z1) par rapport à la première partie de boîtier (21), **caractérisé en ce que**
le support de montage (72) est fixé à la deuxième partie de boîtier (22).

2. Dispositif d'entraînement de véhicule (10) selon la revendication 1, dans lequel
la deuxième partie de boîtier (22) comprend une partie de paroi latérale (27) s'étendant dans une direction haut-bas (Z) et entourant une chambre de logement (E2) où le module onduleur (INV) et le module source d'énergie (PWR) sont logés, vus dans la direction haut-bas, à l'état monté sur le véhicule,
une partie à bossage (27b) est prévue sur chacune d'une paire de surfaces extérieures faisant face à des côtés opposés, la chambre de logement (E2) étant prise en sandwich entre elles dans la partie de paroi latérale (27), et
le support de montage (72) est fixé à chacune d'une paire de parties à bossage (27b).

3. Dispositif d'entraînement de véhicule (10) selon la revendication 1 ou 2, comprenant en outre :
une paire de supports de montage (72), dans lequel
la deuxième partie de boîtier (22) comprend une chambre de logement (E2) où le module onduleur (INV) et le module source d'énergie (PWR) sont logés, une partie d'ouverture (20a) de la chambre de logement (E2) qui est ouverte vers le côté supérieur (Z1), et une partie de couvercle (23) qui couvre la partie d'ouverture (20a), et
vu de haut en bas dans l'état monté sur le véhicule,
la chambre de logement (E2) est disposée dans une position chevauchant la machine électrique tournante (MG) et le mécanisme de transmission de puissance (GT) qui sont logés dans la première partie de boîtier (21), et
la paire de supports de montage (72) est disposée à des positions qui ne chevauchent pas la chambre de logement (E2).

4. Dispositif d'entraînement de véhicule (10) selon l'une quelconque des revendications 1 à 3, comprenant en outre :
un support de montage auxiliaire (74) disposé sur un côté inférieur (Z2) par rapport à une paire de supports de montage (72) et couplé au corps de véhicule (80) dans l'état monté sur le véhicule tout en incluant la paire de supports de montage (72), dans lequel
le support de montage auxiliaire (74) est fixé à la première partie de boîtier (21), et
avec une direction orthogonale à la direction de déplacement du véhicule (8) comme direction de la largeur vue dans une direction haut-bas, la paire de supports de montage (72) est fixée à un élément transversal (81) s'étendant dans la direction de la largeur dans le corps de véhicule (80).
